# EUROPÄISCHE PATENTANMELDUNG

(11) **EP 2 243 384 A1**
(43) Veröffentlichungstag der Anmeldung: **27.10.2010**
(21) Anmeldenummer: 10158749.1
(22) Anmeldetag: 31.03.2010
(51) Int. Cl.: A24C 5/34

(54) **Verfahren und Vorrichtung zur Überprüfung der Qualität von mit Kapseln versehenen Filterstäben**

(30) Priorität: 21.04.2009 DE 102009017962
(71) Anmelder: HAUNI Maschinenbau AG, 21033 Hamburg (DE)
(72) Erfinder: Ruge, Niels, 21465, Reinbek (DE)
(74) Vertreter: Seemann, Ralph

(57) **Zusammenfassung**

Die Erfindung betrifft ein Verfahren zum Überprüfen der Qualität von mit Kapseln (19, 19', 19", 19"'), die eine flüssige Füllung enthalten, versehenen Filterstäben (6), wobei die Filterstäbe (6) eine Längsachse (40) aufweisen und längsaxial in einer wenigstens abschnittsweise geschlossenen Verbindungsleitung (1, 23, 24) gefördert werden. Die Erfindung betrifft ferner eine Vorrichtung zur Überprüfung der Qualität von mit Kapseln (40), die eine flüssige Füllung enthalten, versehenen Filterstäben (6), wobei eine Filterstabfördervorrichtung (17, 17', 22-26) vorgesehen ist, die die Filterstäbe (6) längsaxial von einer Sendestation (22) zu einer Empfangsstation (17, 17') über eine Verbindungsleitung (23, 24') fördert.

Das erfindungsgemäße Verfahren zeichnet sich dadurch aus, dass die Qualität der Filterstäbe (6) mittels Mikrowellen überprüft wird.

Die erfindungsgemäße Vorrichtung zeichnet sich dadurch aus, dass zwischen der Sendestation (22) und der Empfangsstation (17, 17') oder in der Empfangsstation (17, 17') eine Mikrowellenmessvorrichtung (10, 11, 11') angeordnet ist.

## Beschreibung

Die Erfindung betrifft ein Verfahren zum Überprüfen der Qualität von mit Kapseln, die eine flüssige Füllung enthalten, versehenen Filterstäben, wobei die Filterstäbe eine Längsachse aufweisen und längsaxial in einer wenigstens abschnittsweise geschlossenen Verbindungsleitung gefördert werden.

Die Erfindung betrifft ferner eine Vorrichtung zur Überprüfung der Qualität von mit Kapseln, die eine flüssige Füllung enthalten, versehenen Filterstäben, wobei eine Filterstabfördervorrichtung vorgesehen ist, die die Filterstäbe längsaxial von einer Sendestation zu einer Empfangsstation über eine Verbindungsleitung fördert.

Schließlich betrifft die Erfindung ein Filterstablogistiksystem mit einer entsprechenden Vorrichtung zur Überprüfung der Qualität von mit Kapseln, die eine flüssige Füllung enthalten, versehenen Filterstäben.

Neue Zigarettenprodukte, die auf den Markt gebracht werden sollen, haben als wesentlichen Bestandteil des Filters eine oder mehrere Kapseln, die mit einer Flüssigkeit, z.B. Menthol, gefüllt ist bzw. sind. Die Kapsel wird unmittelbar, bevor die Zigarette entzündet wird, durch den Raucher durch Druck auf den Filter aufgebrochen, wodurch die Flüssigkeit freigesetzt wird und sich das Aroma der Flüssigkeit entfaltet. Damit dieses gewährleistet ist, ist es notwendig, eine gleichbleibende Qualität des Zigarettenproduktes sicherzustellen. Die Kapsel muss, wenn das Zigarettenprodukt verkauft wird, gefüllt sein und einwandfrei im Filter positioniert sein.

Aus EP 1 495 684 B1 ist ein Verfahren zum längsaxialen Überführen stabförmiger Artikel der Tabak verarbeitenden Industrie, insbesondere von Filterstäben, bekannt, wobei von einer Sendestation zu einer Empfangsstation über eine Verbindungsleitung die stabförmigen Artikel überführt werden und dabei in der Verbindungsleitung vereinzelt werden. Die Artikel werden nach der Vereinzelung mittels einer Prüfeinrichtung geprüft und anschließend mittels einer Schleuseneinrichtung in Abhängigkeit des Prüfergebnisses aus der Verbindungsleitung ausgeschleust.

Aus EP 1 495 684 B1 ist ferner eine entsprechende Fördereinrichtung zum längsaxialen Überführen stabförmiger Artikel der Tabak verarbeitenden Industrie, insbesondere Filterstäbe, von einer Sendestation zu einer Empfangsstation über eine Verbindungsleitung mit wenigstens einem Vereinzelungsmittel für die Artikel bekannt, wobei in Förderrichtung der Artikel an der Verbindungsleitung das Vereinzelungsmittel für die Artikel und wenigstens eine Schleuseneinrichtung vorgesehen sind, wobei eine Prüfeinrichtung für die Artikel zwischen dem Vereinzelungsmittel und der Schleuseneinrichtung vorgesehen ist.

Aus EP 1 397 961 B1 ist ein Verfahren zur Messung wenigstens einer physikalischen, insbesondere geometrischen, Eigenschaft von in einer Förderleitung geförderten stabförmigen Artikeln der Tabak verarbeitenden Industrie, insbesondere Filterstäben, bekannt, wobei als physikalische Eigenschaften die Länge und der Durchmesser der Artikel in einer optischen Messeinrichtung gleichzeitig gemessen werden. Es ist außerdem eine entsprechende Vorrichtung offenbart.

Die Messeinrichtung befindet sich zwischen einem Bremsrollenpaar und einem Beschleunigerrollenpaar für die Filterstäbe.

Es ist Aufgabe der vorliegenden Erfindung, eine verlässliche Überprüfung der Qualität von mit Kapseln, die eine flüssige Füllung enthalten sollen, versehenen Filterstäben vorzusehen, bei der insbesondere es auch ermöglicht ist, ein langsames Auslaufen der Kapseln festzustellen.

Gelöst wird diese Aufgabe durch ein Verfahren zum Überprüfen der Qualität von mit Kapseln, die eine flüssige Füllung enthalten, versehenen Filterstäben, wobei die Filterstäbe eine Längsachse aufweisen und längsaxial in einer wenigstens abschnittsweise geschlossenen Verbindungsleitung gefördert werden, wobei die Qualität der Filterstäbe mittels Mikrowellen überprüft wird.

Es ist erfindungsgemäß festgestellt worden, dass der Zustand von Kapseln, die in einen Filterstrang eingebracht sind, sehr gut durch Mikrowellen detektiert werden kann. Ausgelaufene Kapseln bzw. Kapseln, die beim Einbringen in einen Filterstrang einen Riss oder mehrere Risse erhalten haben, können durch die größere räumliche Ausdehnung der ausgelaufenen Flüssigkeit ebenfalls durch Mikrowellen sehr gut detektiert werden.

Bei den Filterstäben handelt es sich vorzugsweise um Filterstäbe der Tabak verarbeitenden Industrie, die eine endliche Länge aufweisen. Vorzugsweise handelt es sich um eine vorgebbare Länge. Die Position der Kapseln ist vorzugsweise relativ zu einem Ende des Filterstabs auch vorgebbar.

Unter dem Begriff des Überprüfens der Qualität von mit Kapseln versehenen Filterstäben wird insbesondere verstanden, dass die Position der Kapseln und/oder der Zustand der Kapseln sowie die Anzahl der Kapseln überprüft werden. Bei der Anzahl der Kapseln wird bei der Überprüfung festgestellt, ob genau die richtige Anzahl der Kapseln eingebracht wurde oder ob eine Kapsel fehlt bzw. zu viele Kapseln eingebracht wurden oder gar keine Kapsel eingebracht wurde. Im Hinblick auf die Position der Kapsel wird insbesondere überprüft, ob in längsaxialer Richtung des Filterstabs, also in der Richtung zur Längsachse, des Filterstabs die Kapsel richtig positioniert ist. Bei der Überprüfung des Zustandes der Kapseln wird festgestellt, ob die jeweilige Kapsel vollständig gefüllt oder nur teilweise gefüllt ist, ob die jeweilige Kapsel leer ist oder ob sie ausgelaufen ist.

Im Falle, dass die Kapsel ausgelaufen ist, ist Flüssigkeit im Filterstab verteilt, was insbesondere mit dem Mikrowellenmessverfahren sehr gut festgestellt werden kann. Die Überprüfung der Qualität findet erst nach einem längsaxialen Transport durch eine Verbindungsleitung statt, so dass zwischen Einbringen der Kapsel in einen Filterstrang, dem Ablängen der Filterstäbe von dem Filterstrang und dem anschließenden Transport bzw. der anschließenden Förderung durch die Verbindungsleitung eine entsprechende Zeit verstrichen ist, die in vielen Fällen schon ausreichend ist, um ein Auslaufen der Kapseln festzustellen.

Vorzugsweise findet das Überprüfen während einer längsaxialen Bewegung der Filterstäbe, insbesondere bei einer vorgebbaren Geschwindigkeit, statt. Hierbei handelt es sich um eine möglichst konstante Geschwindigkeit der Filterstäbe während der Überprüfung. Außerdem haben die verschiedenen aufeinanderfolgenden Filterstäbe auch die gleiche vorgebbare Geschwindigkeit während der Messung. Hierdurch kann sehr definiert und sehr genau die Qualität der Filterstäbe festgestellt werden.

Vorzugsweise werden vor dem Schritt des Überprüfens der Filterstäbe diese für eine vorgebbare Zeit gelagert. Dieses kann beispielsweise in Filterstabschragen geschehen oder in einem Speicher, vorzugsweise einem first in - first out - Speicher (FIFO-Speicher). Die gelagerten Filterstäbe werden beispielsweise für einen Zeitraum von 1 Std. bis 24 Std. vorzugsweise gelagert. In diesem Zeitraum können auch sehr kleine Risse dadurch festgestellt werden, dass in dieser Zeit die Kapseln entsprechend ausgelaufen sind. Vorzugsweise werden die Filter beim Lagern so bewegt, dass diese wenigstens einmal um 180° geschwenkt werden, um so bei jeder Lage eines Risses in der Kapsel ein Auslaufen zu gewährleisten und feststellen zu können.

Vorzugsweise geschieht das Überprüfen in der Verbindungsleitung oder stromabwärts der Verbindungsleitung nach einem Abbremsen und/oder einem anschließenden Beschleunigen der Filterstäbe. Insbesondere ist die Variante bevorzugt, dass das Überprüfen stromabwärts der Verbindungsleitung nach einem Abbremsen und anschließendem Beschleunigen der Filterstäbe geschieht. Für diesen Fall ist eine besonders definierte und qualitativ hochwertige Überprüfung möglich.

Vorzugsweise werden Filterstäbe nach dem Überprüfen queraxial beschleunigt, um in ein Magazin eines Filteransetzers bzw. einer Filteransetzmaschine eingebracht zu werden oder auf einem Förderweg zu einer weiteren Sendestation, die dann die Filter längsaxial zu einer Filteransetzmaschine fördert.

Vorzugsweise werden qualitativ schlechte Filterstäbe ausgeschleust. Hierbei handelt es sich um Filterstäbe mit ausgelaufenen Kapseln, falsch positionierten Kapseln, fehlenden Kapseln usw.

Die Aufgabe wird ferner durch eine Vorrichtung zur Überprüfung der Qualität von mit Kapseln, die eine flüssige Füllung enthalten, versehenen Filterstäben gelöst, wobei eine Filterstabfördervorrichtung vorgesehen ist, die die Filterstäbe längsaxial von einer Sendestation zu einer Empfangsstation über eine Verbindungsleitung fördert, wobei zwischen der Sendestation und der Empfangsstation oder in der Empfangsstation eine Mikrowellenmessvorrichtung angeordnet ist.

Vorzugsweise weist die Empfangsstation eine die Filterstäbe längsaxial beschleunigende Vorrichtung, die im Rahmen dieser Erfindung Beschleunigungsvorrichtung genannt wird, auf.

Vorzugsweise weist die Beschleunigungsvorrichtung eine Bremseinheit und stromabwärts der Bremseinheit in Förderrichtung der Filterstäbe eine Beschleunigungseinheit auf. Durch diese Maßnahme kann sehr definiert die Qualität der überprüften Filterstäbe gewährleistet werden. Vorzugsweise ist die Mikrowellenmessvorrichtung zwischen Bremseinheit und Beschleunigungseinheit oder stromabwärts der Beschleunigungseinheit angeordnet. Die bevorzugte bei diesen beiden Varianten ist allerdings die Variante, dass die Mikrowellenmessvorrichtung stromabwärts der Beschleunigungseinheit angeordnet ist, da für diesen Fall die verlässlichsten Ergebnisse in der Qualitätsüberprüfung der Filterstäbe gegeben sind. Dieses liegt insbesondere an der, verglichen mit der Anordnung zwischen Bremseinheit und Beschleunigungseinheit, weniger stark schwankenden Lage des Filterstabs.

Vorzugsweise ist stromabwärts der Beschleunigungsvorrichtung eine Filterausschleusvorrichtung vorgesehen, die wenigstens abschnittsweise gekrümmt ist. Die Krümmung der Filterausschleusvorrichtung dient gleichzeitig zur sicheren Führung für ein sich an die Filterausschleusvorrichtung vorzugsweise anschließendes Querfördermittel, das insbesondere als Trommel ausgebildet ist, die in entsprechenden Aufnahmen die Filterstäbe aufnimmt und dann queraxial abgibt.

Unter queraxial wird im Rahmen der Erfindung eine Richtung quer zur Längsachse der Filterstäbe verstanden, wohingegen unter längsaxial im Rahmen der Erfindung eine Richtung längs der Längsachse der Filterstäbe verstanden wird. Vorzugsweise gibt die Empfangsstation die Filterstäbe quer zu deren Längsachse ab. Dieses geschieht beispielsweise mit dem eben genannten Querfördermittel, das als Trommel ausgebildet sein kann.

Die Aufgabe wird ferner durch ein Filterstablogistiksystem mit einer Vorrichtung zur Überprüfung der Qualität (Qualitätsüberprüfungsvorrichtung) von mit Kapseln, die eine flüssige Füllung enthalten, versehenen Filterstäben, die vorstehend beschrieben ist und im Rahmen der Erfindung als Qualitätsüberprüfungsvorrichtung bezeichnet wird, gelöst, wobei eine Filterstablagervorrichtung vorgesehen ist, die mit der Qualitätsüberprüfungsvorrichtung verbunden ist oder verbindbar ist.

Durch die Filterstablagervorrichtung ist es möglich, die Filterstäbe eine entsprechende Zeit lang zu lagern, so dass auch bei kleinen Rissen ein entsprechendes Auslaufen der Kapseln in den Filterstäben festgestellt werden kann. Vorzugsweise ist die Filterstablagervorrichtung ein Schragen. Alternativ kann auch ein first in - first out - Speicher (FIFO-Speicher) vorgesehen sein, wobei vorzugsweise entsprechende Fördermittel vorgesehen sind, die die Filterstäbe queraxial in den Speicher fördern und auch queraxial aus dem Speicher wieder entnehmen können. Vorzugsweise ist eine Schragenschwenkvorrichtung vorgesehen, die dafür sorgt, dass die in dem Schragen angeordneten Filterstäbe um beispielsweise 180° verschwenkt werden, um so sicherzustellen, dass bei jeder möglichen Anordnung ein Riss in einer Kapsel im Filterstab auch festgestellt werden kann, da somit möglicherweise bei einem oben liegenden Riss kein Auslaufen durch die Schwerkraft stattfindet.

Alternativ kann vorgesehen sein, in einer Speichervorrichtung bzw. einer Lagervorrichtung es zu ermöglichen, dass die Filterstäbe selbst um beispielsweise 180° verschwenkt werden, beispielsweise durch eine Drehung um deren Längsachse. Dieses kann durch entsprechende Bewegung in einer Filterstablagervorrichtung geschehen. Dieses kann auch dadurch geschehen, dass ein Schragen zunächst entleert und danach wieder befüllt wird.

Vorzugsweise ist, insbesondere unmittelbar, ein Magazin für eine Filteransetzmaschine an die Empfangsstation der Qualitätsüberprüfungsvorrichtung angeordnet.

Vorzugsweise ist eine Filterstabsendevorrichtung stromabwärts der Empfangsstation der Qualitätsüberprüfungsvorrichtung vorgesehen, die Filterstäbe quer zu deren Längsachse empfängt und längsaxial in eine Verbindungsleitung, insbesondere zu einer Filterstabansetzmaschine der Tabak verarbeitenden Industrie, abgibt.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1a: eine schematische Draufsicht einer erfindungsgemäßen Empfangsstation,
- Fig. 1b: eine schematische Seitenansicht eines Teils aus Fig. 1a,
- Fig. 2: eine schematische Seitenansicht einer erfindungsgemäßen Qualitätsüberprüfungsvorrichtung und
- Fig. 3: eine schematische Seitenansicht einer weiteren erfindungsgemäßen Qualitätsüberprüfungsvorrichtung.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

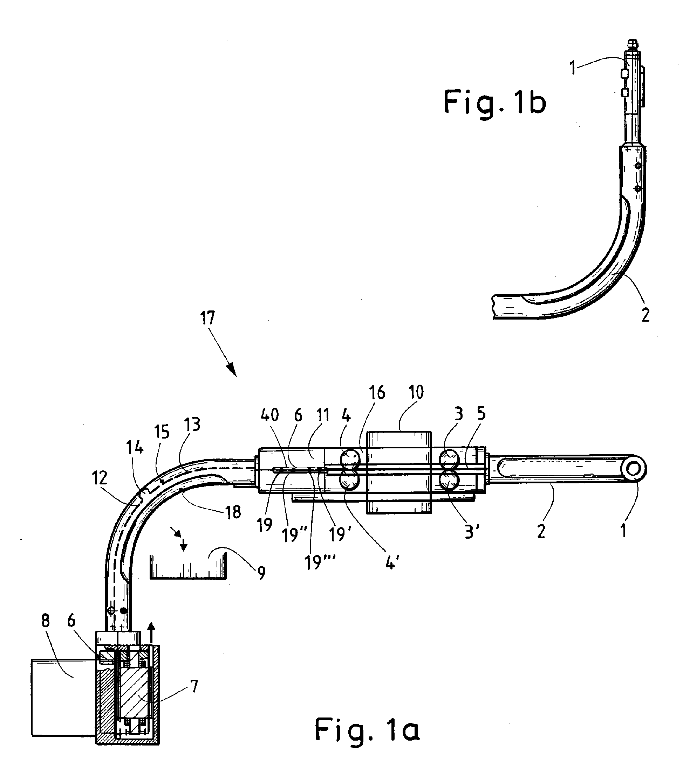

Fig. 1a zeigt schematisch eine Empfangsstation einer erfindungsgemäßen Qualitätsüberprüfungsvorrichtung. Die Empfangsstation 17 kann auch als Filterstabempfänger bezeichnet werden. Diese dient zur Förderung von Filterstäben 6 in ein Filtermagazin 8 bzw. auf eine nicht dargestellte Fördervorrichtung, die anstelle des Filtermagazins 8 vorgesehen sein kann. Das Magazin 8 kann ein Magazin einer nicht dargestellten Filteransetzmaschine der Tabak verarbeitenden Industrie sein oder aber ein Schragen, in dem die Filterstäbe 6 zwischengelagert werden. Die in das Filtermagazin 8 eingeführten Filterstäbe 6 dienen dazu, nachdem diese beispielsweise in Filterstäbe zweifacher Gebrauchslänge geschnitten wurden, mit Tabakstockpaaren zusammengeführt zu werden, um Filterzigaretten herzustellen. Das Filtermaterial kann Filtertow sein.

Die in das Filtermagazin 8 zugeführten Filterstäbe 6 können auch dazu dienen, in entsprechende Filtersegmente zerschnitten und einer Anordnung von Filtersegmenten zur Herstellung von Multisegmentfiltern zugeführt zu werden. Der Einrichtung können hierzu mehrere oder sämtliche Funktionseinheiten einer Einrichtung zum Zusammenstellen von Gruppen von Filtersegmenten zur Herstellung von Multisegmentfiltern der Tabak verarbeitenden Industrie gemäß der Patentanmeldung mit dem Aktenzeichen DE 101 55 292.0 der Anmelderin zugeordnet sein.

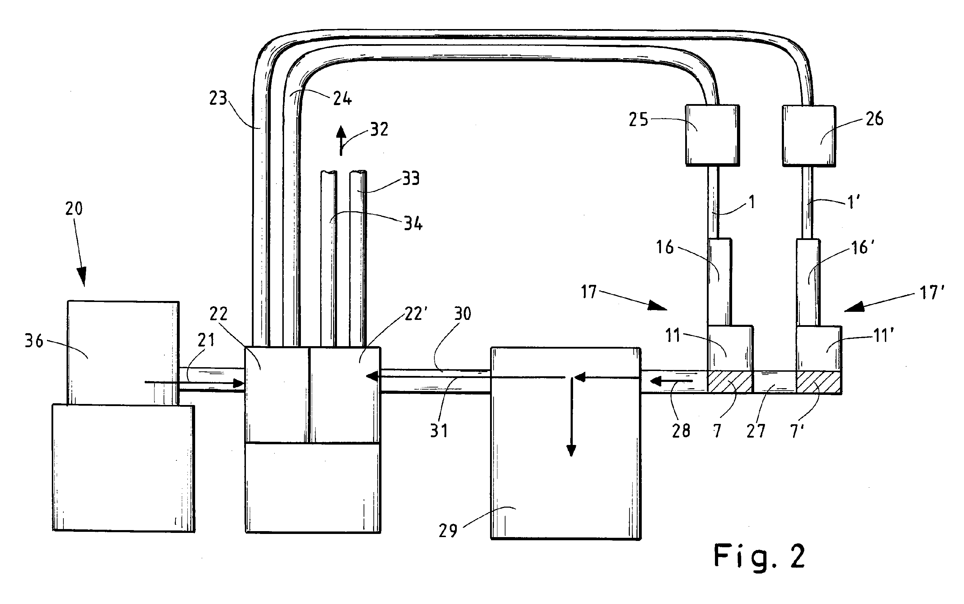

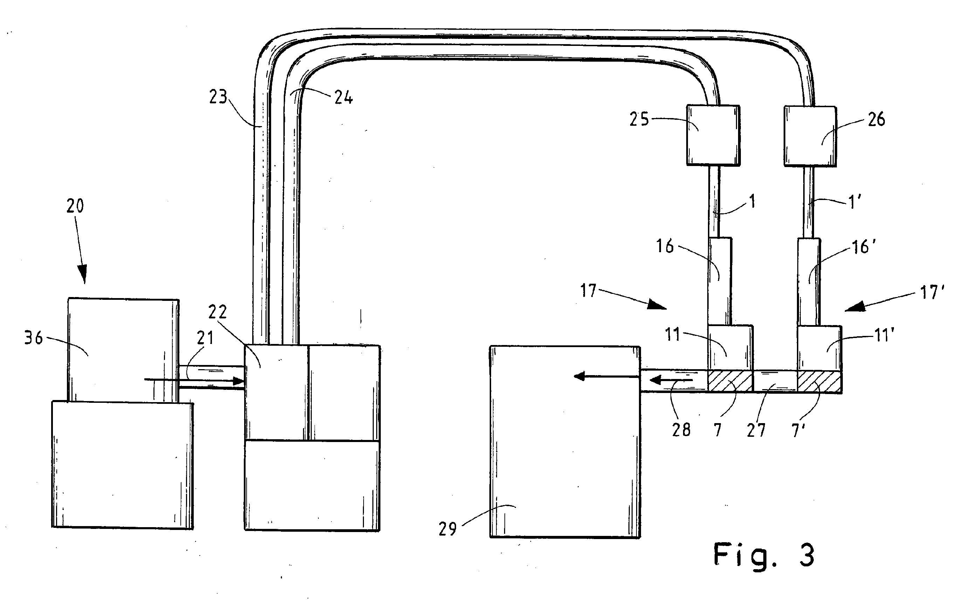

Die Filterstäbe 6 mit einer vierfachen Gebrauchslänge, die allgemein auch als N-fache Gebrauchslänge bezeichnet werden kann, wobei N eine natürliche Zahl ist, werden über eine hier nicht dargestellte Rohrleitung von einer Filterherstellmaschine mittels eines Filterstabsenders bzw. einer Sendestation einer Anschlussleitung 1 zugeführt. Alternativ kann die Anschlussleitung 1 bzw. 1' auch in den Ausführungsformen gemäß Fig. 2 und 3 vorgesehen sein.

Die Filterstäbe 6 werden beabstandet im Zuführrohr zur Anschlussleitung 1 gefördert und gelangen dann in eine Bogenführung 2, um mittels Bremsrollen 3 in einem Kanal 5 abgebremst zu werden. Die Anschlussleitung 1 und die Bogenführung 2 sind schematisch in Fig. 1b in einer Seitenansicht dargestellt. In Fig. 1a sind diese Elemente in einer schematischen Draufsicht dargestellt. Nachdem die Filterstäbe 6 die Bremsrollen 3, 3' passiert haben, werden diese anschließend mittels Beschleunigerrollen 4, 4' durch eine Mikrowellenmessvorrichtung 11 längs der Längsachse 40 geführt und anschließend auf einer Führungsbahn an einer Führungswand 13 einer Bogenführung 12 entlang zu einer Trommel 7 gefördert. Die Trommel 7 verfügt über Aufnahmemulden, in die die zugeführten Filterstäbe 6 eingebracht werden. Weitere Einzelheiten zu der Trommel 7 können der EP 1 397 961 B1 entnommen werden.

Zwischen dem Bremsrollenpaar 3, 3' und dem Beschleunigerrollenpaar 4, 4' kann auch eine Mikrowellenmessvorrichtung 10 vorgesehen sein. Die Mikrowellenmessvorrichtung 10 und die Mikrowellenmessvorrichtung 11 sind alternative Ausgestaltungen einer erfindungsgemäßen Empfangsstation 17. Anstelle der Ausgestaltung als Mikrowellenmessvorrichtung 10 kann auch eine optische Messvorrichtung an der Position der Mikrowellenmessvorrichtung 10 vorgesehen sein, die gleichzeitig die Länge und den Durchmesser des Filterstabs misst, um anschließend in der Mikrowellenmessvorrichtung 11 die Qualität der Filterstäbe zu überprüfen.

Die Positionierung der Mikrowellenmessvorrichtung 11 ist bevorzugt, da dort der Filterstab 6 örtlich gesehen sich weniger bewegt, und zwar queraxial. Anstelle einer Bogenführung 12 kann auch unmittelbar ein Anschluss an eine Trommel vorgesehen sein. Die Bogenführung 12 ist allerdings bevorzugt, da dort ein Ausschleusen von qualitativ minderwertigen Filterstäben geschehen kann, was im Folgenden noch dargestellt wird, und zum anderen die Führung an der Führungswand 13 zu einer genauen Lage der Filterstäbe 6 beim Einführen in die Trommel 7 führt, so dass dort kein Stau bzw. keine fehlerhafte Übergabe geschieht.

Zur Bestimmung der Qualität bzw. zur Überprüfung der Qualität der Filterstäbe, die mit Kapseln gefüllt sind, die eine flüssige Füllung enthalten, werden diese durch das Mikrowellenmessfeld eines Mikrowellenresonators 10 oder 11 bzw. bei den Beispielen aus Fig. 2 und 3 11 und 11' hindurchgeführt. Es wird dann bei einer vorgegebenen Arbeitsfrequenz eine Veränderung des Mikrowellenfeldes im Mikrowellenresonator gemessen und anhand der Veränderung die Beschickung und/oder die Qualität der in den Filterstab eingebrachten Kapseln bestimmt. Insbesondere vorzugsweise wird ein Mikrowellenresonator als Mikrowellenresonator 10 oder 11 verwendet, der in DE 198 54 550 B4 beschrieben ist und das dort genannte Resonatorgehäuse aufweist. Nähere Informationen zum Messverfahren, das dazu dient, die Qualität der Filterstäbe, die mit Kapseln gefüllt sind, zu überprüfen, sind in der am heutigen Tage beim Deutschen Patent- und Markenamt angemeldeten Patentanmeldung mit dem Titel "Kapselüberwachung und Kapselpositionsregelung in Filtern der Tabak verarbeitenden Industrie" beschrieben. Zur Beschreibung des Messverfahrens wird insbesondere auf die Figuren 2 bis 7 dieser Patentanmeldung verwiesen und die hierzu gehörige Figurenbeschreibung.

Die Arbeitsfrequenz liegt vorzugsweise zwischen 2 und 30 GHz, insbesondere liegt die Arbeitsfrequenz vorzugsweise in einem Bereich von 2 bis 10 GHz, insbesondere vorzugsweise zwischen 5 und 6,5 GHz. Vorzugsweise liegt die Arbeitsfrequenz im Bereich einer aufsteigenden oder absteigenden Flanke einer Kurve der Messstärke bzw. Signalstärke über einer Frequenz. Eine derartige Kurve kann dadurch erhalten werden, dass Mikrowellen mit einer durchstimmbaren Frequenz in den Mikrowellenresonator eingekoppelt werden und die jeweils sich ergebende Amplitude der ausgekoppelten Mikrowelle, die aus dem Mikrowellenresonator ausgekoppelt wurde, gemessen wird. Hierbei ergibt sich dann eine Kurve, wie beispielsweise in Fig. 6 der oben genannten, am heutigen Tage beim Deutschen Patent- und Markenamt angemeldeten, Patentanmeldung gezeigt ist.

Die Arbeitsfrequenz wird dann nicht in das Maximum dieses Frequenzganges gelegt, sondern auf eine Flanke. Hierdurch können Frequenzgangänderungen deutlicher festgestellt werden. Außerdem ist eine derartige Einpunktmessung, also eine Messung bei einer Frequenz durch eine sehr hohe Verarbeitungsgeschwindigkeit gekennzeichnet.

Die Messung geschieht dann so, dass eine Mikrowelle mit einer Frequenz, die der Arbeitsfrequenz entspricht, in den Mikrowellenresonator eingekoppelt wird und das entsprechende Signal der ausgekoppelten Mikrowelle gemessen wird. Vorzugsweise kann alleine oder zusätzlich die Steigung bei der Arbeitsfrequenz gemessen werden, so dass eine genauere Aussage über die Qualität der eingebrachten Kapseln gegeben werden kann. Bei der Steigung handelt es sich beispielsweise um die Steigung des gemessenen Frequenzganges bei der Arbeitsfrequenz bzw. um die zeitliche Änderung des Signals. Vorzugsweise ist somit die Veränderung eine Signaländerung des Mikrowellenfeldes und/oder eine Steigungsänderung eines Signals des Mikrowellenfeldes bei der Arbeitsfrequenz.

Vorzugsweise ist die Veränderung zeit- und/oder ortsabhängig. Hiermit ist insbesondere gemeint, dass ein bewegter Filterstab gemessen wird, so dass die Veränderungen des Mikrowellenfelds durch zeitlich sich ändernde Messbedingungen gegeben sind bzw. bezogen auf den Filterstab in längsaxialer Richtung ortsabhängig sich die Veränderung ergibt.

Vorzugsweise wird eine Bestimmung der Anzahl, der Position und/oder des Zustands der Kapseln vorgenommen.

Vorzugsweise wird durch ein Prüfen des Zustands der Kapseln festgestellt, ob die Kapseln vollständig gefüllt, teilweise gefüllt, leer und/oder ausgelaufen sind und/oder ob es die gewünschten Kapseln sind.

In den Mikrowellenfeldern der Mikrowellenmessvorrichtung 10 oder alternativ der Mikrowellenmessvorrichtung 11, 11' wird also insbesondere überprüft, ob die Kapseln 19, 19', 19", 19"' im Filterstab 6 in Ordnung sind oder ob diese beispielsweise ausgelaufen sind. Sofern diese ausgelaufen oder falsch positioniert sind oder fehlen oder ein anderes Kriterium für eine schlechte Qualität des Filterstabs erfüllt ist, wird ein Steuersignal abgegeben, das dafür sorgt, dass in der Bogenführung 12 nach Erkennen des Filterstabs 6 über die Lichtschranke 15 dieser Filterstab 6 durch Einlassen eines Druckluftstoßes in die Ausblasdüse 14 in der Bogenführung 12 der Filterstab 6 durch die Aussparung 18 in einen Auffangbehälter 9 ausgestoßen wird. Nur die qualitativ hochwertigen Filterstäbe 6 werden in die Trommel 7 verbracht und anschließend in das Magazin 8.

In Fig. 2 ist schematisch ein erfindungsgemäßes Filterstablogistiksystem mit einer erfindungsgemäßen Qualitätsüberprüfungsvorrichtung dargestellt. Ein mit Filterstäben 6 befüllter Schragen 36 wird in die Schragenentleerstation 20 eingebracht. Die Filterstäbe werden dann in einer Richtung quer zu deren Längsachse, also queraxial, auf dem Förderweg 21 zu einer Sendestation 22 gefördert. Die Sendestation 22 transportiert die Filterstäbe 6 in einer Richtung längs deren Längsachse, also längsaxial, in die Rohrleitungen 23 und 24. Die Filterstäbe 6 sollen hierbei möglichst schon vereinzelt sein. Die Filterstäbe 6 durchlaufen dann in den Rohrleitungen 23 und 24 eine Entlüftungsvorrichtung 25 und 26, die die Druckluft aus der Rohrleitungen 23 und 24 herauslässt. Anschließend gelangen die Filterstäbe 6 über die Anschlussleitungen 1, 1' in eine Beschleunigungsvorrichtung 16, 16', die beispielsweise wie in Fig. 1a ausgestaltet sein kann. Hieran schließen sich Mikrowellenmesssensoren 11 und 11' an. Die Beschleunigungsvorrichtungen 16, 16' und die Mikrowellenmessvorrichtungen 11 und 11 sowie die Trommeln 7, 7', die sich an die Mikrowellenmessvorrichtungen 11 und 11' anschließen, stellen die Empfangsstationen 17 und 17' dar. Es ist auch denkbar, dass die Mikrowellenmessvorrichtungen 11 und 11' stromaufwärts der Beschleunigungsvorrichtungen 16, 16', bevorzugterweise stromabwärts der Entlüftungsvorrichtungen 25 und 26 angeordnet sind.

Die bevorzugte Anordnung der Mikrowellenmessvorrichtungen ist allerdings die in Fig. 2 und 3 dargestellte.

Die entsprechend für qualitativ hochwertig erkannten Filterstäbe werden anschließend aus den Trommeln 7, 7' auf einem Förderweg 27 in Förderrichtung 28 zu einer Schragenfüllvorrichtung 29 gefördert, wo diese in entsprechende Schragen abgefüllt werden, um dann anschließend die Filterstäbe 6, die in den Schragen abgefüllt sind, zu einer Filteransetzmaschine fördern zu können. Alternativ kann anstelle der Befüllung in Schragen vorgesehen sein, die Filterstäbe 6 durch die Schragenfüllvorrichtung 29 hindurch zu transportieren, und zwar auf einem Förderweg 30 in Förderrichtung 31 zu einer Sendestation 22', die dann die queraxial geförderten Filterstäbe 6 längsaxial in Rohrleitungen 33 und 34 in Förderrichtung 32 zur Weiterverarbeitung, beispielsweise zur Weiterverarbeitung in einer Filteransetzmaschine, versenden. Es kann auch vorgesehen sein, dass anstelle einer Schragenfüllvorrichtung 29 nur ein Förderweg von den Trommeln 7, 7' zur Sendestation 22' vorgesehen ist.

In Fig. 3 ist eine alternative schematische Seitenansicht eines erfindungsgemäßen Filterstablogistiksystems mit erfindungsgemäßen Qualitätsüberprüfungsvorrichtungen vorgesehen. Als Alternative zu dem Ausführungsbeispiel gemäß Fig. 2 gelangen die für gut befundenen Filterstäbe 6 über einen Förderweg in Förderrichtung 28 direkt in ein Magazin 35, beispielsweise ein Magazin einer Filteransetzmaschine. Das Magazin 35 der Filteransetzmaschine kann sich auch unmittelbar an die Trommeln 7 und 7' anschließen.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1, 1': Anschlussleitung
- 2: Bogenführung
- 3, 3': Bremsrolle
- 4, 4': Beschleunigerrolle
- 5: Kanal
- 6: Filterstab
- 7, 7': Trommel
- 8: Magazin
- 9: Auffangbehälter
- 10: Mikrowellenmessvorrichtung
- 11, 11': Mikrowellenmessvorrichtung
- 12: Bogenführung
- 13: Führungswand
- 14: Ausblasdüse
- 15: Lichtschranke
- 16, 16': Beschleunigungsvorrichtung
- 17, 17': Empfangsstation
- 18: Aussparung
- 19, 19', 19", 19"': Kapsel
- 20: Schragenentleerstation
- 21: Förderweg
- 22, 22': Sendestation
- 23: Rohrleitung
- 24: Rohrleitung
- 25: Entlüftungsvorrichtung
- 26: Entlüftungsvorrichtung
- 27: Förderweg
- 28: Förderrichtung
- 29: Schragenfüllvorrichtung
- 30: Förderweg
- 31: Förderrichtung
- 32: Förderrichtung
- 33: Rohrleitung
- 34: Rohrleitung
- 35: Magazin
- 36: Schragen

## Patentansprüche

1. Verfahren zum Überprüfen der Qualität von mit Kapseln (19, 19', 19", 19"'), die eine flüssige Füllung enthalten, versehenen Filterstäben (6), wobei die Filterstäbe (6) eine Längsachse (40) aufweisen und längsaxial in einer wenigstens abschnittsweise geschlossenen Verbindungsleitung (1, 23, 24) gefördert werden, **dadurch gekennzeichnet, dass** die Qualität der Filterstäbe (6) mittels Mikrowellen überprüft wird.

2. Verfahren nach Anspruch 1, **dadurch gekennzeichnet, dass** das Überprüfen während einer längsaxialen Bewegung der Filterstäbe (6), insbesondere bei einer vorgebbaren konstanten Geschwindigkeit, geschieht.

3. Verfahren nach Anspruch 1 oder 2, **dadurch gekennzeichnet, dass** vor dem Schritt des Überprüfens die Filterstäbe (6) für eine vorgebbare Zeit gelagert werden.

4. Verfahren nach einem der Ansprüche 1 bis 3, **dadurch gekennzeichnet, dass** das Überprüfen in der Verbindungsleitung (1, 23, 24) oder stromabwärts der Verbindungsleitung (1, 23, 24) nach einem Abbremsen und/oder einem anschließenden Beschleunigen der Filterstäbe (6) geschieht.

5. Verfahren nach einem der Ansprüche 1 bis 4, **dadurch gekennzeichnet, dass** die Filterstäbe (6) nach dem Überprüfen queraxial beschleunigt werden.

6. Verfahren nach einem der Ansprüche 1 bis 5, **dadurch gekennzeichnet, dass** qualitativ schlechte Filterstäbe (6) ausgeschleust werden.

7. Vorrichtung zur Überprüfung der Qualität (Qualitätsüberprüfungsvorrichtung) von mit Kapseln (40), die eine flüssige Füllung enthalten, versehenen Filterstäben (6), wobei eine Filterstabfördervorrichtung (17, 17', 22-26) vorgesehen ist, die die Filterstäbe (6) längsaxial von einer Sendestation (22) zu einer Empfangsstation (17, 17') über eine Verbindungsleitung (23, 24') fördert, **dadurch gekennzeichnet, dass** zwischen der Sendestation (22) und der Empfangsstation (17, 17') oder in der Empfangsstation (17, 17') eine Mikrowellenmessvorrichtung (10, 11, 11') angeordnet ist.

8. Vorrichtung nach Anspruch 7, **dadurch gekennzeichnet, dass** die Empfangsstation (17, 17') eine die Filterstäbe (6) längsaxial beschleunigende Vorrichtung (Beschleunigungsvorrichtung) (16, 16') aufweist.

9. Vorrichtung nach Anspruch 8, **dadurch gekennzeichnet, dass** die Beschleunigungsvorrichtung (16, 16') eine Bremseinheit (3, 3') und stromabwärts in Förderrichtung der Filterstäbe (6) der Bremseinheit (3, 3') eine Beschleunigungseinheit aufweist.

10. Vorrichtung nach Anspruch 9, **dadurch gekennzeichnet, dass** die Mikrowellenmessvorrichtung (10, 11, 11') zwischen der Bremseinheit (3, 3') und der Beschleunigungseinheit (4, 4') oder stromabwärts der Beschleunigungseinheit (4, 4') angeordnet ist.

11. Vorrichtung nach einem der Ansprüche 8 bis 10, **dadurch gekennzeichnet, dass** stromabwärts der Beschleunigungsvorrichtung (16, 16') eine Filterausschleusvorrichtung (12-15, 18) vorgesehen ist, die wenigstens abschnittsweise gekrümmt ist, wobei insbesondere die Empfangsstation (17, 17') die Filterstäbe (6) quer zu deren Längsachse (40) abgibt.

12. Filterstablogistiksystem mit einer Vorrichtung zur Überprüfung der Qualität (Qualitätsüberprüfungsvorrichtung) (10, 11, 11', 17, 17') von mit Kapseln (19, 19', 19", 19"'), die eine flüssige Füllung enthalten, versehenen Filterstäben (6) nach einem der Ansprüche 7 bis 11, **dadurch gekennzeichnet, dass** eine Filterstablagervorrichtung (36) vorgesehen ist, die mit der Qualitätsüberprüfungsvorrichtung (10, 11, 11', 17, 17') verbunden ist oder verbindbar ist.

13. Filterstablogistiksystem nach Anspruch 12, **dadurch gekennzeichnet, dass** die Filterstablagervorrichtung (36) ein Schragen ist.

14. Filterstablogistiksystem nach Anspruch 12 oder 13, **dadurch gekennzeichnet, dass**, insbesondere unmittelbar, an der Empfangsstation (17, 17') der Qualitätsüberprüfungsvorrichtung (10, 11, 11', 17, 17') ein Magazin (35) für eine Filteransetzmaschine angeordnet ist.

15. Filterstablogistiksystem nach Anspruch 12 oder 13, **dadurch gekennzeichnet, dass** eine Filterstabsendevorrichtung (22') stromabwärts der Empfangsstation (17, 17') der Qualitätsüberprüfungsvorrichtung (10, 11, 11', 17, 17') vorgesehen ist, die Filterstäbe (6) quer zu deren Längsachse (40) empfängt und längsaxial in eine Verbindungsleitung (33, 34) abgibt.
